# EUROPÄISCHE PATENTANMELDUNG

(11) **EP 1 659 661 A2**
(43) Veröffentlichungstag der Anmeldung: **24.05.2006**
(21) Anmeldenummer: 05020360.3
(22) Anmeldetag: 19.09.2005
(51) Int. Cl.: H01R 13/447

(54) **Schutzelement für UP-Steckdosen**

(30) Priorität: 15.11.2004 DE 202004017664 U
(71) Anmelder: Heinrich Kopp GmbH, 63796 Kahl am Main (DE)
(72) Erfinder: Fleckenstein, Hans-Jürgen, 63776 Mömbris (DE); Schmitt, Emil, 63776 Mömbris (DE); Wagner, Matthias, 63829 Krombach (DE)
(74) Vertreter: Reinhard - Skuhra - Weise & Partner

(57) **Zusammenfassung**

Die vorliegende Erfindung schafft ein Schutzelement 10 für UP-Steckdosen 24, insbesondere für einen Schutz gegen Verunreinigungen und mechanische Beschädigung der Steckdose während der Bauphase und einer Renovierungsphase, welches aus einem Steckdosentopf-Befestigungsabschnitt 11, der einen steckerseitigen Zugang zu dem Steckdosentopf zulässt, und aus einem Steckdosenrahmen-Abdeckungsabschnitt 12 besteht.

## Beschreibung

Die Erfindung betrifft ein Schutzelement für UP-Steckdosen, insbesondere für einen Schutz gegen Verunreinigungen und mechanische Beschädigungen während der Bauphase und einer Renovierungsphase.

Bisher werden UP-Steckdosen immer mit einer vorgegebenen Abdeckung in Verkehr gebracht, welche den genormten Steckdosentopf beinhaltet. Dies hat in nachteiliger Weise zur Folge, daß der Kunde bzw. Anwender sich frühzeitig, insbesondere in der Rohbauphase oder Vorinstallationsphase für ein bestimmtes. Abdeckungsdesign entscheiden muß. Nachteilig ist dabei, daß derartige Abdeckungsdesigns teilweise aus optischen Gründen empfindliche Oberflächen aufweisen, welche im rauhen Baubetrieb beschädigt werden können. Deshalb ist es üblich, derartige Designabdeckungen entweder beim Installateur bzw. Kunden oder auf der Baustelle zwischenzulagern. Dies hat für eine vorinstallierte Unterputzsteckdose den Nachteil, daß die Einsätze allen möglichen Verunreinigungen und Beschädigungen während der Bautätigkeit ausgesetzt sind. Insbesondere können spannungsführende Kontakte nicht ausreichend abgedeckt sein und damit bei Berührung gefährlich werden. Häufig werden deshalb in diesen Bauphasen Unterputzsteckdosen überhaupt nicht elektrisch angeschlossen, sondern nur in den vorgesehenen Topf eingesetzt und sind demgemäß nicht in der Lage, Strom über einen eingesteckten Stecker zu liefern.

Nachteilig ist weiterhin, daß ein Elektrofachhändler, ein Fachmarkt, ein Baumarkt oder dergleichen für jede Schalterdesignserie jeweils eine größere Anzahl von kompletten Unterputzsteckdosen bevorraten muß, was mit Raumbedarf für Lagerung und mit einem Binden von einem Kapital verbunden ist.

Demgemäß besteht Bedarf nach Schaffung eines Schutzelements für UP-Steckdosen, insbesondere für einen Schutz gegen Verunreinigung und mechanische Beschädigung der Steckdose während der Bauphase und einer Renovierungsphase, bei dem unabhängig von der späteren Designabdeckung ein bestimmungsgemäßer Gebrauch der UP-Steckdose während der Bauphase und etwaiger Renovierungsphasen gewährleistet ist. Das Schutzelement soll dabei insbesondere seitliche Schutzkontakte gegen Farbe und gegen Verbiegen im Sinne einer Kontaktsicherheit schützen und einen bestimmungsgemäßen Gebrauch unabhängig von der vorgesehenen späteren Originaldesignabdeckung gewährleisten.

Erfindungsgemäß wird dieses Ziel durch die im Schutzanspruch 1 genannten Merkmale gelöst.

Bevorzugte Merkmale, die die Erfindung vorteilhaft weiterbilden, sind den nachgeordneten Schutzansprüchen zu entnehmen.

In vorteilhafter Weise macht demgemäß die Erfindung ein Schutzelement mit einem Steckdosen-Befestigungsabschnitt, der einen steckerseitigen Zugang zu dem Steckdosentopf zuläßt, und aus einem Steckdosenrahmen-Abdeckungsabschnitt verfügbar, der für jede standardisierte Unterputzsteckdose verwendet werden kann. Der vorgesehene Steckdosen-Befestigungsabschnitt läßt nach seiner Befestigung in dem Steckdosentopf den Zugang zu elektrischen Steckdosenöffnungen sowie zu den Massekontakten durch Vorsehen entsprechender Ausnehmungen an dem Befestigungsabschnitt zu.

Nach einer bevorzugten weiteren Ausgestaltung der Erfindung ist der Steckdosentopf-Befestigungsabschnitt mit einer Öffnung für eine Befestigungsschraube versehen. Hiermit ist es vorteilhaft möglich, den Steckdosentopf-Befestigungsabschnitt an der UP-Steckdose festzuschrauben, wobei insbesondere die mittige ohnehin vorhandene Befestigungsschraubenöffnung zwischen den Steckkontakten einer UP-Steckdose geeignet ist.

Vorteilhaft ist es zudem, wenn der Steckdosentopf-Befestigungsabschnitt Spreizkrallen-Zugangsöffnungen aufweist, weil dann die UP-Steckdose bereits mit daran befestigtem Schutzelement passend in die vorgesehene Wandöffnung eingesetzt und darin befestigt werden kann.

Gemäß einer bevorzugten Ausgestaltung der Erfindung weist der Befestigungsabschnitt ein angeformtes Steckdosentopf-Einsatzteil auf, das wie ein üblicher Stecker ohne elektrischen Steckkontakte ausgebildet und wie dieser für ein klemmendes Halten des Befestigungsabschnitts in den Steckdosentopf vorgesehen ist. Nach einer weiteren Ausgestaltung der Erfindung ist zudem vorgesehen, daß der Steckdosentopf-Befestigungsabschnitt einstückig mit dem Steckdosenrahmen-Abdeckungsabschnitt gebildet ist. Hierdurch wird die Handhabung und die Herstellung wesentlich vereinfacht.

Gemäß einer weiteren Ausgestaltung der Erfindung ist zudem vorgesehen, daß das Schutzelement wenigstens ein Filmscharnier zur Befestigung an einer Steckdose aufweist, wobei vorzugsweise das Filmscharnier an einem Randteil des Steckdosenrahmen-Abdeckungsabschnitts gebildet ist. Hierdurch besteht die Möglichkeit, bereits bei der Lieferung der UP-Steckdose ein entsprechendes Schutzelement mit vorzusehen, das nach Erfüllen seiner Schutzfunktion in einfacher Weise entfernt werden kann.

Bevorzugt weist weiterhin der Steckdosenrahmen-Abdeckungsabschnitt Ausnehmungen für den Zugang zu Rahmenbefestigungsabschnitten auf. Dies hat den Vorteil, daß auch eine Befestigung der UP-Steckdose mit aufgesetztem Schutzelement alternativ oder ergänzend zu der Spreizkrallenbefestigung ermöglicht wird.

Der Abdeckungsabschnitt selbst ist bevorzugt kappenförmig ausgebildet.

Das erfindungsgemäße Schutzelement ist bevorzugt aus einem elektrisch isolierenden und elektrostatisch nicht aufladbaren Material hergestellt, das weiter bevorzugt auch schmutzabweisend, thermisch beständig und elektrostatisch nicht aufladbar ist. Bevorzugt ist als Material ein Rezyklat-Material, beispielsweise aus aufbereiteten Produktionsabfällen, vorgesehen.

Vorteilhaft wird durch die Erfindung somit einem Installateur oder einem Endkunden zum Zeitpunkt der Elektroinstallation eine preiswerte und funktionsfähige UP-Steckdose verfügbar gemacht, wodurch in einer derartigen Bauphase nur geringe Investitionen anfallen. Die UP-Steckdosen sowie deren Kontaktteile sind wirkungsvoll während Wandarbeiten wie Streichen, Tapezieren, Aufbringen von Dekorputz usw. vor Verschmutzung und Beschädigung geschützt, wobei das Schutzelement als Schmutzfänger dient und vorteilhaft erst nach Abschluß der Bauarbeiten durch die Originalabdeckung im ausgewählten Design ersetzt wird.

Damit eine UP-Steckdose ohne vorhergehende Abnahme der Abdeckung und anschließendem Wiederaufsetzen einer Abdeckung funktionsgemäß installiert werden kann, weist das Schutzelement vorteilhaft Öffnungen zur Betätigung der Spreizkrallenschrauben und/oder der Befestigungsschrauben für UP- bzw. Hohlwanddosen auf.

Nach einer bevorzugten weiteren Ausgestaltung der Erfindung ist der Abdeckungsabschnitt kappenförmig als Schutzdeckel ausgebildet, wodurch es ermöglicht wird, auch seitliche Schutzkontakte abzudecken. Hierdurch entfallen bisher übliche Schutzmaßnahmen wie Abkleben der Steckdoseneinsätze bzw. -abdeckungen sowie das Reinigen verschmutzter Abdeckungen sowie zugeputzter Tragringe bzw. Schukobügel.

Da zudem durch den Einsatz des erfindungsgemäßen Schutzelements eine frühzeitige Montage der Steckdose in ihrer bestimmungsgemäßen Position und Funktion möglich ist, kann sie vorteilhaft für Bauhandwerker verwendet werden, so daß ein Stolpern über Kabelverlängerungen entfällt.

Vorteilhaft ist durch Verwendung der Schutzelemente von Anfang an ein Berührungsschutz in der Form gewährleistet, daß keine offenen berührungsgefährlichen Steckdosen während der Bauzeit vorliegen. Günstig ist weiterhin, daß ein übliches Zwischenlagern der zu den installierten UP-Dosen gehörenden Originaldesignabdeckungen und deren möglicher Verlust entfällt und zudem auch zu einem späteren Zeitpunkt entsprechend der Raumdekoration und Einrichtung eine andere passende Designauswahl der Abdeckung erfolgen kann.

Die Lager- und Vorratshaltung für UP-Steckdosen ist vorteilhaft deutlich verringert, weil die UP-Steckdose mit Schutzelement gleichzeitig als Basismodul für alle verfügbaren Designabdeckungen fungiert. Von Vorteil ist dabei zudem, daß auch später noch, beispielsweise bei Tapetenwechsel, ein Austausch der Designabdeckung möglich ist, ohne daß hierzu wie bisher eine komplette Systemsteckdose mit Designabdeckung gekauft werden muß.

Nachfolgend werden Ausführungsbeispiele der Erfindung unter Bezugnahme auf die beigefügten Zeichnungen näher erläutert.

Es zeigen:
- Figur: 1 eine Vorderansicht eines ersten Ausführungsbeispiels eines Schutzelements, das auf einem Steckdoseneinsatz einer UP-Steckdose befestigt ist;
- Figur 2: eine Vorderansicht auf das Schutzelement mit Steckdosenkörper gemäß Figur 1;
- Figur 3: einen Schnitt entlang der Schnittlinie III-III in Figur 1, wobei der Körper und der Rahmen der UP-Steckdose weggelassen sind;
- Figur 4: eine Draufsicht auf ein weiteres Ausführungsbeispiel eines Schutzelements, das mit seinem Befestigungsabschnitt in einen Steckdosentopf einer UP-Steckdose eingesetzt ist;
- Figur 5: eine Seitenansicht des Schutzelements in UP-Steckdose gemäß Figur 4;
- Figur 6: eine Darstellung des Schutzelements gemäß Figur 4 nach dem Entfernen aus dem Steckdosentopf und
- Figur 7: einen Schnitt entlang der Linie VII-VII in Figur 6.

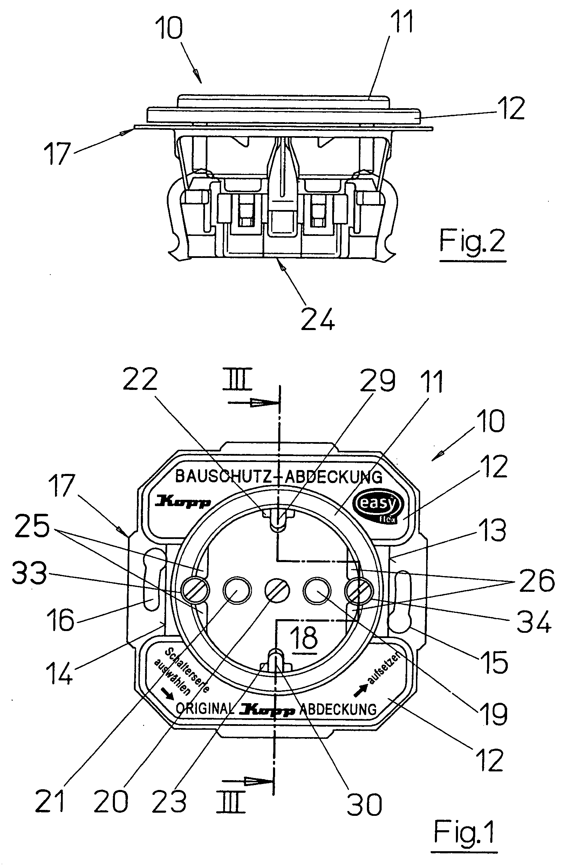

In Figur 1 ist eine Draufsicht auf ein erstes Ausführungsbeispiel eines erfindungsgemäßen Schutzelements 10 dargestellt, das einen Steckdosentopf-Befestigungsabschnitt 11 und einen Steckdosenrahmen-Abdeckungsabschnitt 12 aufweist, der in seiner Außenkontur dem Grundriß eines Steckdosentragrahmens 17 annähernd folgt. Das Schutzelement 10 besteht aus einem elektrisch isolierenden Material. Der Steckdosentopf-Befestigungsabschnitt 11 und der Steckdosenrahmen-Abdeckungsabschnitt 12 sind einstückig hergestellt.

Der Abdeckungsabschnitt 12 weist einander gegenüberliegende Ausnehmungen 13 und 14 auf, die einen Zugang zu Befestigungsabschnitten 15 bzw. 16 des Steckdosentragrahmens 17 ermöglichen.

Der Steckdosenrahmen-Abdeckungsabschnitt 12 besitzt weiterhin flache Oberseiten, die für die Aufnahme von Beschriftungen geeignet sind.

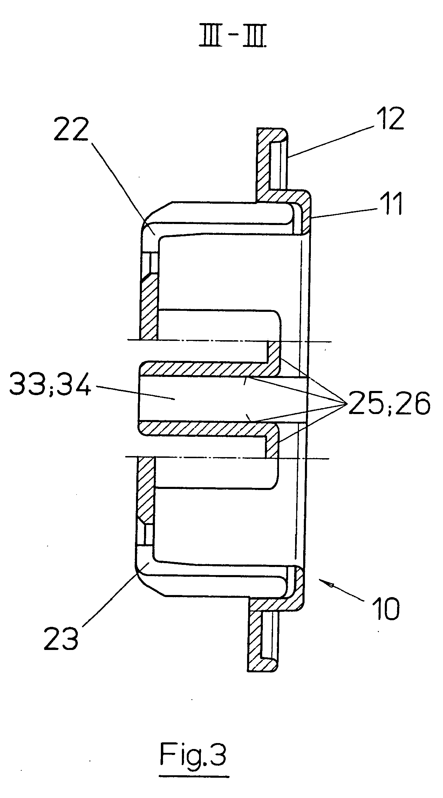

Der Steckdosentopf-Befestigungsabschnitt 11 ist gegenüber dem Steckdosenrahmen-Abdeckungsabschnitt 12 erhaben angeformt und besitzt einen runden Querschnitt. Er ist topfförmig ausgebildet, wobei der Befestigungsabschnitt 11 einen Bodenabschnitt 18 besitzt, in dem eine mittige Öffnung 20 für den Durchtritt einer Befestigungsschraube und daneben Steckkontakt-Durchtrittsöffnungen 19 und 21 sowie Öffnungen 33 und 34 für den Zugang zu Krallenschrauben im Bereich von Steckerführungen 25 und 26 gebildet sind (Fig. 3).

Des weiteren besitzt der topfartige Abdeckungsabschnitt randseitig gegenüberliegende Ausnehmungen 22 und 23 für den Durchtritt von Massekontakten einer UP-Steckdose 24. Außerdem besitzt der topfartige Befestigungsabschnitt 11 einander gegenüberliegende Durchlässe für die Steckerführungen 25 und 26.

Aufgrund dieser Gestaltung erfüllt das Schutzelement 10 nach seinem Befestigen einerseits die vorgesehene Schutzfunktion und erlaubt andererseits eine bestimmungsgemäße sichere und zuverlässige Benutzung der UP-Steckdose. Entfernt werden kann das Schutzelement 10 in einfacher Weise, indem eine Befestigungsschraube aus der mittigen Öffnung 20 entfernt wird.

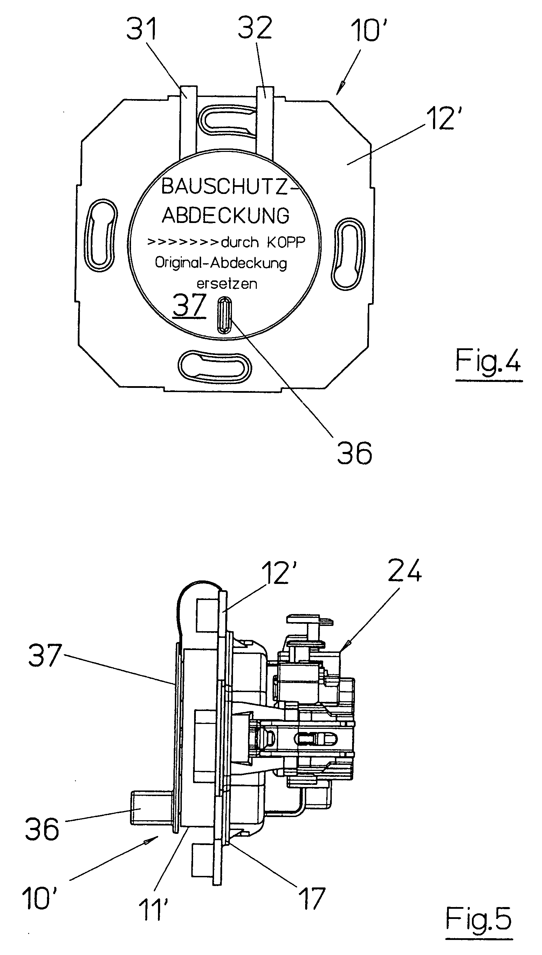

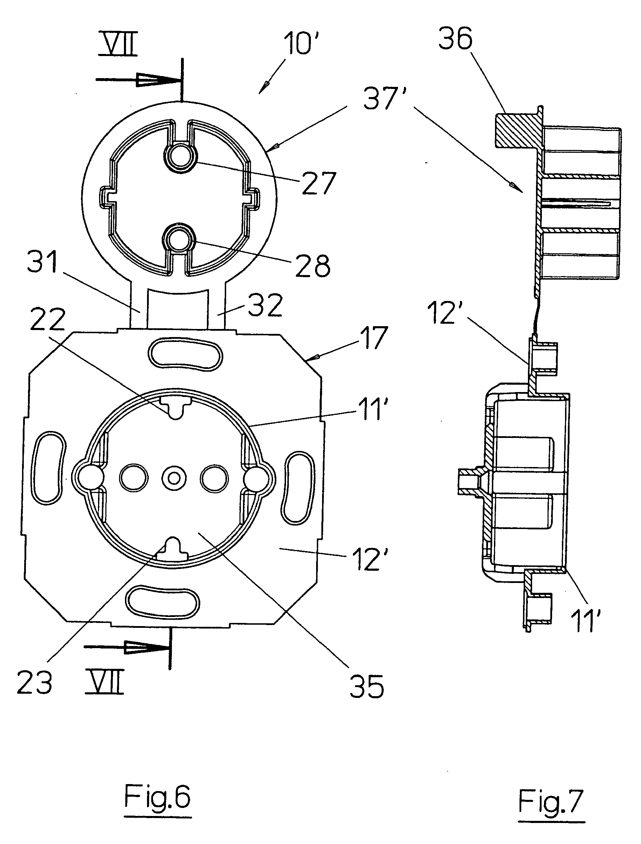

In Figur 4 ist ein weiteres Ausführungsbeispiel eines Schutzelements 10' dargestellt, das einstückig mit einem Steckdosentopf-Befestigungsabschnitt 11' und einem Steckdosenrahmen-Abdeckungsabschnitt 12' gebildet ist, wie gut in den Darstellungen gemäß Figur 6 und 7 zu sehen ist. Bei diesem Ausführungsbeispiel ist ein über zwei Scharniere 31 und 32 angeformter Schutzdeckel 37 nach Art eines Steckeinsatzes für einen Schukostecker in seiner Außenkontur derart gestaltet, daß er passend und mit Klemmsitz in den Steckdosentopf 35 eingesetzt werden kann. Zur Erleichterung des Einsetzens ist an dem Schutzdeckel 37 eine Handhabe 36 angeformt, die ein Einsetzen und Entfernen des stopfenförmigen Schutzdeckels 37 in den Steckdosentopf 35 erleichtert.

Der Schutzdeckel 37 weist weiterhin angeformte kreisförmige Hohlprofile 27 und 28 auf, die bei Einsetzen des Steckdosentopf-Schutzdeckels 37 gegen die Massekontakte 29 bzw. 30 drücken und damit einen Klemmsitz herbeiführen.

Der Steckdosenrahmen-Abdeckungsabschnitt 12 bzw. 12' kann auch so ausgebildet sein, daß er den Steckdosentragrahmen 17 kappenförmig überdeckt.

Bezugszeichenliste
- 10: Schutzelement
- 10': Schutzelement
- 11: Steckdosentopf-Befestigungsabschnitt
- 11': Steckdosentopf-Befestigungsabschnitt
- 12: Steckdosentragrahmen-Abdeckungsabschnitt
- 12': Steckdosentragrahmen-Abdeckungsabschnitt
- 13: Ausnehmung
- 14: Ausnehmung
- 15: Befestigungsabschnitt von 17
- 16: Befestigungsabschnitt von 17
- 17: Steckdosentragrahmen
- 18: Bodenabschnitt von 10
- 19: Steckkontakt-Durchtrittsöffnung
- 20: Öffnung für Befestigungsschraube
- 21: Steckkontakt-Durchtrittsöffnung
- 22: Ausnehmung
- 23: Ausnehmung
- 24: UP-Steckdose
- 25: Stecherführung
- 26: Steckerführung
- 27: Hohlprofil
- 28: Hohlprofil
- 29: Massekontakt
- 30: Massekontakt
- 31: Scharnier
- 32: Scharnier
- 33: Öffnung für Krallenschraube
- 34: Öffnung für Krallenschraube
- 35: Steckdosentopf
- 36: Handhabe
- 37: Schutzdeckel

## Patentansprüche

1. Schutzelement (10, 10') für UP-Steckdosen (24), insbesondere für einen Schutz gegen Verunreinigungen und mechanische Beschädigung der Steckdose während der Bauphase und einer Renovierungsphase, bestehend aus
einem Steckdosentopf-Befestigungsabschnitt (11, 11'), der einen steckerseitigen Zugang zu dem Steckdosentopf (35) zuläßt, und aus
einem Steckdosenrahmen-Abdeckungsabschnitt (12, 12').

2. Schutzelement nach Anspruch 1, **dadurch gekennzeichnet, daß** der Steckdosentopf-Befestigungsabschnitt (11) eine Öffnung für eine Befestigungsschraube aufweist.

3. Schutzelement nach Anspruch 1 oder 2, **dadurch gekennzeichnet, daß** der Steckdosentopf-Befestigungsabschnitt (11) Spreizkrallen-Zugangsöffnungen (33, 34) aufweist.

4. Schutzelement nach Anspruch 1, **dadurch gekennzeichnet, daß** der Befestigungsabschnitt (11, 11') ein angeformtes Steckdosentopf-Einsetzteil (18) aufweist.

5. Schutzelement nach einem der vorangehenden Ansprüche, **dadurch gekennzeichnet, daß** der Steckdosentopf-Befestigungsabschnitt (11, 11') einstückig mit dem Steckdosenrahmen-Abdeckungsabschnitt (12, 12') gebildet ist.

6. Schutzelement nach Anspruch 1 oder 3, **dadurch gekennzeichnet, daß** das Schutzelement wenigstens ein Filmscharnier (31, 32) mit einem angeformten zusätzlichen Schutzdeckel (37) aufweist.

7. Schutzelement nach einem der vorangehenden Ansprüche, **dadurch gekennzeichnet, daß** der Steckdosenrahmen-Abdeckungsabschnitt (12, 12') Ausnehmungen für den Zugang zu Rahmenbefestigungsabschnitten aufweist.

8. Schutzelement nach einem der Ansprüche 1, 3 oder 6, **dadurch gekennzeichnet, daß** der Abdeckungsabschnitt kappenförmig ausgebildet ist.

9. Schutzelement nach Anspruch 6, **dadurch gekennzeichnet, daß** das Filmscharnier (31, 32) an einem Randteil des Steckdosenrahmen-Abdeckungsabschnitts (12') gebildet ist.

10. Schutzelement nach einem der vorangehenden Ansprüche, **dadurch gekennzeichnet, daß** das Schutzelement aus einem elektrisch isolierenden Material besteht.

11. Schutzelement nach Anspruch 10, **dadurch gekennzeichnet, daß** als Material ein Rezyklat-Material vorgesehen ist.
